# EUROPEAN PATENT APPLICATION

(11) **EP 3 605 164 A1**
(43) Date of publication of application: **05.02.2020**
(21) Application number: 18776403.0
(22) Date of filing: 26.03.2018
(51) Int. Cl.: G02B 5/22, B32B 7/02, E06B 3/70, G02B 1/14, G02B 5/26

(54) **LIGHT-TRANSMISSIVE SUBSTRATE FOR REFLECTING HEAT RAYS, AND HEAT-RAY-REFLECTING WINDOW**

(30) Priority: 31.03.2017 JP 2017073174; 16.03.2018 JP 2018049516
(71) Applicant: Nitto Denko Corporation, Ibaraki-shi, Osaka 567-8680 (JP)
(72) Inventor: NAKANISHI, Yosuke, Ibaraki-shi Osaka 567-8680 (JP); UEDA, Eri, Ibaraki-shi Osaka 567-8680 (JP); MACHINAGA, Hironobu, Ibaraki-shi Osaka 567-8680 (JP); OHMORI, Yutaka, Ibaraki-shi Osaka 567-8680 (JP)
(74) Representative: Müller-Boré & Partner Patentanwälte PartG mbB
(86) International application number: PCT/JP2018/012217
(87) International publication number: WO 2018/181220

(57) **Abstract**

A heat-ray-reflective, light-transmissive base material is provided that includes a light-transmissive base material; a hard-coat layer disposed over one surface of the light-transmissive base material; and a transparent conductive oxide layer containing a transparent conductive oxide, disposed over the hard-coat layer.

## Description

### TECHNICAL FIELD

The present invention relates to a heat-ray-reflective, light-transmissive base material, and a heat-ray-reflective window.

### BACKGROUND ART

Conventionally, a heat-ray-reflective, light-transmissive base material has been known that has a layer provided with a function of reflecting heat rays over a light-transmissive base material such as glass or resin.

As such heat-ray-reflective, light-transmissive base materials, base materials have been studied conventionally that reflect part of visible light and near-infrared rays of sunlight or the like, to control incidence of near-infrared rays into the interior of a room or vehicle, so as to provide heat-shielding capability to control rise in temperature. Also, in recent years, studies are conducted on heat-ray-reflective, light-transmissive base materials that have reduced emissivity so as to provide heat insulation capability.

For example, Patent Document 1 discloses a laminated-film-attached transparent substrate that includes a transparent conductive layer, and a laminated film over the transparent conductive layer in which a transparent conductive layer and a nitrogen-containing light-absorbing layer having a film thickness over 10 nm are laminated, with an object of providing a laminated-film-attached transparent substrate that is excellent in durability in addition to high heat-shielding performance and high color-rendering performance.

### RELATED ART DOCUMENTS

### [Patent Document]

Patent Document 1: Japanese Laid-Open Patent Application No. 2016-79051

### SUMMARY OF THE INVENTION

### [PROBLEM TO BE SOLVED BY THE INVENTION]

Meanwhile, a heat-ray-reflective, light-transmissive base material is used, because of its function, as the light-transmissive base material of a daylighting part such as a window, or in a form of being attached to the light-transmissive base material of a daylighting part such as a window; therefore, the base material often comes into contact with human hands and objects. For this reason, it has been desired for a heat-ray-reflective, light-transmissive base material to be preventive with respect to delamination or scratches in a functional layer such as a transparent conductive layer constituting the heat-ray-reflective, light-transmissive base material, so that the function is not reduced and/or the appearance is not impaired, even when a human hand, object, or the like moves on the surface of the heat-ray-reflective, light-transmissive base material in a state of applying pressure to the surface to cause friction. In short, a heat-ray-reflective, light-transmissive base material excellent in abrasion resistance has been desired.

However, such abrasion resistance has not been sufficiently studied for the laminated-film-attached transparent substrate disclosed in Patent Document 1.

Thereupon, in view of the above problem of the conventional technology, it is an object of an aspect of the present invention to provide a heat-ray-reflective, light-transmissive base material that is excellent in abrasion resistance.

### [MEANS FOR SOLVING THE PROBLEM]

To solve the above problem, according to an aspect of the present invention, a heat-ray-reflective, light-transmissive base material is provided that includes a light-transmissive base material; a hard-coat layer disposed over one surface of the light-transmissive base material; and a transparent conductive oxide layer containing a transparent conductive oxide, disposed over the hard-coat layer.

### [ADVANTAGEOUS EFFECT OF THE PRESENT INVENTION]

According to an aspect of the present invention, it is possible to provide a heat-ray-reflective, light-transmissive base material excellent in abrasion resistance.

### [BRIEF DESCRIPTION OF THE DRAWINGS]

FIG. 1 is a cross-sectional view of a heat-ray-reflective, light-transmissive base material in one configuration example according to an embodiment of the present invention;
FIG. 2 is a cross-sectional view of a heat-ray-reflective, light-transmissive base material in another configuration example according to an embodiment of the present invention;
FIG. 3 is a cross-sectional view of a heat-ray-reflective, light-transmissive base material in yet another configuration example according to an embodiment of the present invention; and
FIG. 4 is a cross-sectional view of a heat-ray-reflective window in one configuration example according to an embodiment of the present invention.

### EMBODIMENTS FOR CARRYING OUT THE INVENTION

In the following, an embodiment (referred to as "the present embodiment", below) of the present disclosure will be described in detail; note that the present embodiment is not limited by such details.

### [Heat-ray-reflective, light-transmissive base material]

One configuration example of a heat-ray-reflective, light-transmissive base material of the present embodiment will be described below.

A heat-ray-reflective, light-transmissive base material of the present embodiment includes a light-transmissive base material; a hard-coat layer disposed over one surface of the light-transmissive base material; and a transparent conductive oxide layer containing a transparent conductive oxide, disposed over the hard-coat layer.

The inventors of the present invention conducted intensive investigations on heat-ray-reflective, light-transmissive base materials whose emissivity is reduced to provide heat insulation capability, so as to obtain a heat-ray-reflective, light-transmissive base material that is also excellent in abrasion resistance.

As a result, first, a finding was obtained that providing a transparent conductive oxide layer containing a transparent conductive oxide enables to obtain a heat-ray-reflective, light-transmissive base material having heat insulation capability. One can consider that this is because far-infrared rays can be reflected by using carriers held by the transparent conductive oxide contained in the transparent conductive oxide layer.

However, simply disposing the transparent conductive oxide layer over the light-transmissive base material may result in a case where scratches or delamination are generated on the transparent conductive oxide layer, for example, when a hand or object moves on the heat-ray-reflective, light-transmissive base material in a state of applying pressure to the surface to cause friction, and thereby, deforms the transparent conductive oxide layer. If scratches or delamination are generated on the transparent conductive oxide layer, the function of the transparent conductive oxide layer may be reduced or the appearance may be impaired.

Thereupon, the inventors found that disposing a hard-coat layer over a light-transmissive base material enables to control generation of scratches or delamination, namely, enables to raise the abrasion resistance, even when the transparent conductive oxide layer is pressed or rubbed, and thus, completed the present invention.

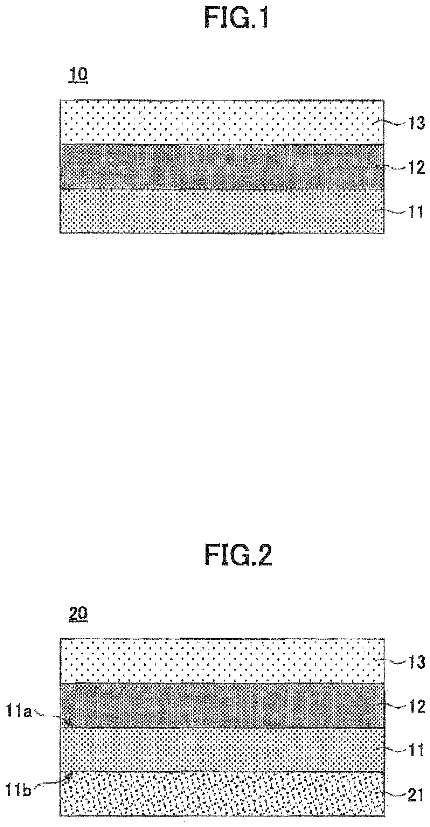

Here, a configuration example of a heat-ray-reflective, light-transmissive base material of the present embodiment is illustrated in FIG. 1. FIG. 1 schematically illustrates a cross-sectional view of a heat-ray-reflective, light-transmissive base material of the present embodiment on a plane parallel to the laminating direction of a light-transmissive base material, a hard-coat layer, and a transparent conductive oxide layer.

As illustrated in FIG. 1, a heat-ray-reflective, light-transmissive base material 10 of the present embodiment may have a structure in which a hard-coat layer 12 and a transparent conductive oxide layer 13 disposed over the hard-coat layer 12 are laminated over one surface of a light-transmissive base material 11. In the following, each of the layers will be described.

As the light-transmissive base material 11, various light-transmissive base materials capable of transmitting visible light can be used favorably. As the light-transmissive base material 11, one having visible light transmittance greater than or equal to 10% can be used more favorably. Note that in the present description, a visible light transmittance is measured in accordance with JIS A5759-2008 (films for building window glass).

As the light-transmissive base material 11, a glass plate, a light-transmissive resin base material, or the like can be used favorably. A heat-ray-reflective, light-transmissive base material of the present embodiment can control deformation of the transparent conductive oxide layer and can increase the abrasion resistance by providing the hard-coat layer. Moreover, the effect can be exhibited especially in the case of the light-transmissive base material being particularly easy to deform, such as a light-transmissive resin base material. For this reason, the light-transmissive base material of a heat-ray-reflective, light-transmissive base material of the present embodiment is more favorably a light-transmissive resin base material.

As the material of a light-transmissive resin base material, any material can be used favorably as long as being capable of transmitting visible light as described above. In addition, since heat treatment or the like needs to be carried out when forming layers over the light-transmissive base material 11, a resin that has heat resistance may be used favorably. As resin materials constituting a light-transmissive resin base material, one or more species selected from among, for example, polyethylene terephthalate (PET), polyethylene naphthalate (PEN), polyetheretherketone (PEEK), polycarbonate (PC), and the like may be used favorably.

A heat-ray-reflective, light-transmissive base material of the present embodiment can be used in a form of, for example, being fitted into a window frame or the like as the light-transmissive base material of a daylighting part such as a window, or being attached to the light-transmissive base material of a daylighting part such as a window. For this reason, the thickness and material can be selected for the light-transmissive base material 11 depending on the use and the like. The light-transmissive base material 11 may have a thickness, for example, greater than or equal to 10 µm and less than or equal to 10 mm.

For example, in the case of using a heat-ray-reflective, light-transmissive base material of the present embodiment as the light-transmissive base material of a daylighting part such as a window, it is favorable to select the thickness and material of the light-transmissive base material 11 such that the light-transmissive base material 11 has sufficient strength.

Alternatively, in the case of using a heat-ray-reflective, light-transmissive base material of the present embodiment by attaching to the light-transmissive base material of a daylighting part such as a window, it is favorable to select the thickness and material of the light-transmissive base material 11 to have flexibility so as to be easily attachable to the light-transmissive base material of the window or the like, and to improve the productivity of a heat-ray-reflective substrate. In the case of adopting a light-transmissive base material having flexibility, a light-transmissive resin base material is used favorably as the light-transmissive base material. In the case of using a light-transmissive resin base material as a light-transmissive base material having flexibility, the thickness is favorably within a range greater than or equal to 10 µm and less than or equal to 300 µm.

Note that the light-transmissive base material 11 may be constituted with a single sheet of a light-transmissive base material, or may be constituted with two or more sheets of a light-transmissive base material that are bonded to each other to be combined to be used. In the case of using a combination of two or more sheets of a light-transmissive base material that are bonded to each other, it is favorable that the total thickness falls within, for example, a favorable thickness range for a single light-transmissive base material as described above.

The hard-coat layer 12 supports the transparent conductive oxide layer 13 and can control deformation of the transparent conductive oxide layer 13 when pressed or the like.

The hard-coat layer 12 can be formed by using, for example, a resin, to be formed as a resin hard-coat layer. The material of the hard-coat layer is not limited in particular. For example, one or more resins selected from among acrylic resins, silicone resins, urethane resins, and the like can be favorably used.

Further, a hard-coat layer containing inorganic particles can be expected to improve adhesiveness between the hard-coat layer and a transparent conductive layer. Although the material of inorganic particles is not limited in particular, for example, one or more species of inorganic particles selected from among silica, alumina, zirconia, and the like can be favorably used.

The hard-coat layer 12 can be formed, for example, by coating a resin on one surface of the light-transmissive base material 11 or the like and curing the resin.

The thickness of the hard-coat layer 12 is not limited in particular, and can be selected discretionarily depending on the material of the hard-coat layer 12 and/or required levels of visible light transmittance, abrasion resistance, and the like. For example, the thickness of the hard-coat layer 12 is favorably greater than or equal to 0.5 µm and less than or equal to 10 µm, and more favorably greater than or equal to 0.7 µm and less than or equal to 5 µm.

This is because setting the thickness of the hard-coat layer 12 to be greater than or equal to 0.5 µm enables to obtain a hard-coat layer having sufficient strength, and enables to control deformation of the transparent conductive oxide layer 13 particularly. This is also because setting the thickness of the hard-coat layer 12 to be less than or equal to 10 µm enables to control the internal stress that is generated by contraction of the hard-coat layer.

The transparent conductive oxide layer 13 is a layer containing a transparent conductive oxide, and may also be a layer formed of a transparent conductive oxide. According to the investigations of the inventors of the present invention, far-infrared rays can be reflected by carriers contained in a transparent conductive oxide. For this reason, a heat-ray-reflective, light-transmissive base material of the present embodiment can be made as a heat-ray-reflective, light-transmissive base material excellent in heat insulation by providing a transparent conductive oxide layer.

A transparent conductive oxide contained in a transparent conductive oxide layer is not limited in particular, and various transparent conductive oxides can be used as long as the material can reflect far-infrared rays. However, as described above, considering carriers to reflect far-infrared rays, the transparent conductive oxide favorably contains, for example, one or more species selected from among an indium oxide doped with one or more species selected from among tin, titanium, tungsten, molybdenum, zinc, and hydrogen; a tin oxide doped with one or more species selected from among antimony, indium, tantalum, chlorine, and fluorine; and a zinc oxide doped with one or more species selected from among indium, aluminum, tin, gallium, fluorine, and boron.

As the transparent conductive oxide, an indium oxide doped with one or more species selected from among tin, titanium, tungsten, molybdenum, zinc, and hydrogen is more favorable; and an indium oxide doped with one or more species selected from among tin and zinc is even more favorable.

The thickness of a transparent conductive oxide layer is not limited in particular, and can be discretionarily selected depending on required levels of heat insulation and the like. For example, the thickness of a transparent conductive oxide layer is favorably greater than or equal to 30 nm and less than or equal to 500 nm, and more favorably greater than or equal to 35 nm and less than or equal to 400 nm.

This is because setting the thickness of a transparent conductive oxide layer to be greater than or equal to 30 nm enables to reflect far-infrared rays in particular and to improve the heat insulation performance. This is also because setting the thickness of the transparent conductive oxide layer to be less than or equal to 500 nm enables to maintain sufficiently high visible light transmittance.

The film-forming method of a transparent conductive oxide layer is not limited in particular; for example, a film-forming method using one or more types of dry processes selected from among sputtering, vacuum evaporation, CVD, electron beam evaporation, and the like can be used favorably. In addition, it is favorable to carry out heat treatment after the film formation to increase crystallinity.

A heat-ray-reflective, light-transmissive base material of the present embodiment is not limited to have only a light-transmissive base material, a hard-coat layer, and a transparent conductive oxide layer as described above, and may further have an optional layer.

For example, an underlayer such as an optical adjustment layer, a gas barrier layer, an adhesiveness improving layer, or the like can be provided between the hard-coat layer and the transparent conductive oxide layer. An optical adjustment layer enables to improve color tone and transparency; a gas barrier layer enables to improve the crystallization rate of a transparent conductive oxide; and an adhesiveness improving layer enables to improve durability such as delamination resistance between layers and cracking resistance.

Although underlayers to be configured are not limited in particular, as an adhesiveness improving layer and/or a gas barrier layer, for example, a layer containing alumina (Al₂O₃) may be listed. Also, as an optical adjustment layer, a layer containing zirconia (ZrO₂), a layer containing hollow particles, or the like may be listed.

For example, a heat-ray-reflective, light-transmissive base material of the present embodiment may include, like a heat-ray-reflective, light-transmissive base material 20 illustrated in FIG. 2, an adhesive layer 21 on the other surface 11b opposite to the one surface 11a of a light-transmissive base material 11, over which a hard-coat layer 12 and a transparent conductive oxide layer 13 are provided.

A heat-ray-reflective, light-transmissive base material of the present embodiment may also be used in a form of being attached to the light-transmissive base material of a daylighting part such as a window as described above. Therefore, providing an adhesive layer 21 as described above eases the work of attaching to the light-transmissive base material of a daylighting part such as a window.

Although the material of an adhesive layer is not limited in particular, it is favorable to use a material having high visible light transmittance. As the material of an adhesive layer, for example, an acrylic adhesive, rubber-based adhesive, silicone-based adhesive, or the like may be used. Among these, an acrylic adhesive containing an acrylic polymer as the main component is excellent in optical transparency, exhibits appropriate wettability, cohesiveness, and adhesiveness, and is excellent in weather resistance, heat resistance, and the like; therefore, it is favorable as the material of an adhesive layer.

It is favorable that an adhesive layer has high visible light transmittance and low ultraviolet transmittance. Lowering the ultraviolet light transmittance of an adhesive layer enables to control deterioration of a light-transmissive base material, a hard-coat layer, and a transparent conductive oxide layer caused by ultraviolet light such as sunlight. From the viewpoint of lowering the ultraviolet light transmittance of an adhesive layer, the adhesive layer may also contain an ultraviolet absorber. Note that deterioration of a transparent conductive oxide layer and the like caused by ultraviolet rays from outdoors may also be controlled by using a light-transmissive base material or the like that contains an ultraviolet absorber. It is favorable to cover an exposed surface of an adhesive layer by a release paper temporarily attached to the surface for the purpose of preventing contamination of the exposed surface until the heat-ray-reflective, light-transmissive base material is put to practical use. Thereby, contamination caused by contact with the exterior of the exposed surface of the adhesive layer can be prevented in a normal handling state.

In the case of using a heat-ray-reflective, light-transmissive base material of the present embodiment as the light-transmissive base material of a daylighting part such as a window by fitting into the window frame or the like, there is no need to attach to another light-transmissive base material; therefore, it is favorable not to have an adhesive layer.

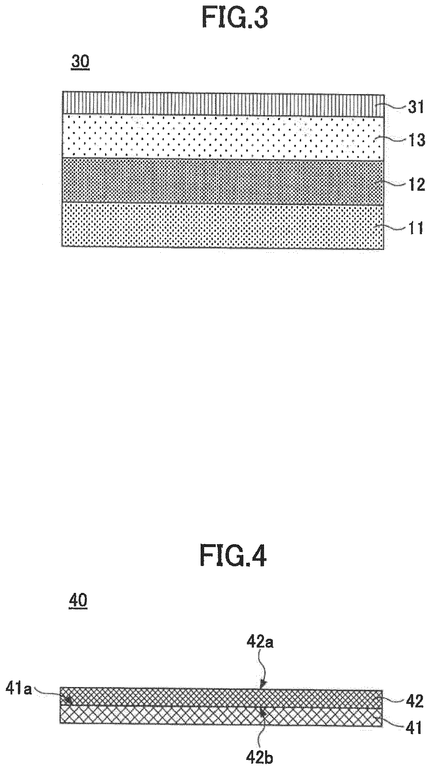

In addition, a heat-ray-reflective, light-transmissive base material of the present embodiment may further include a surface protection layer 31 over a transparent conductive oxide layer 13, like a heat-ray-reflective, light-transmissive base material 30 illustrated in FIG. 3. Note that the heat-ray-reflective, light-transmissive base material 30 can have a hard-coat layer 12 and a light-transmissive base material 11 under the transparent conductive oxide layer 13 as illustrated in FIG. 3.

Providing the surface protection layer 31 enables to prevent the transparent conductive oxide layer 13 from being directly contacted by a human hand or the like; therefore, the abrasion resistance can be increased particularly.

The thickness of a surface protection layer is favorably greater than or equal to 5 nm and less than or equal to 1 µm and more favorably greater than or equal to 5 nm and less than or equal to 500 nm. This is because setting the thickness of a surface protection layer to greater than or equal to 5 nm enables to protect the transparent conductive oxide layer 13 sufficiently and to increase the abrasion resistance particularly. Also, setting the thickness greater than 1 µm does not bring a significant difference in the effect, rather, may increase the emissivity due to far-infrared absorption. Therefore, the thickness of a surface protection layer is favorably less than or equal to 1 µm.

As the material of a surface protection layer 31, one having high visible light transmittance and being excellent in mechanical strength and chemical strength is favorable. From the viewpoint of enhancing the abrasion resistance and the chemical protection effect of a transparent conductive oxide layer, an organic material or inorganic material is favorable. As an organic material, for example, an actinic-ray-curable or thermosetting organic material such as a fluorine-based, acryl-based, urethane-based, ester-based, epoxy-based, silicone-based, or olefin-based material; or an organic-inorganic hybrid material in which an organic component and an inorganic component are chemically bonded, is favorably used.

Also, as an inorganic material, for example, a transparent oxide or the like that contains at least one species selected from among silicon, aluminum, zinc, titanium, zirconium, and tin as the main components; diamond-like carbon; or the like may be listed.

In the case of using an organic material as the surface protection layer 31, it is favorable to introduce a crosslinked structure into the organic material. Forming a crosslinked structure increases the mechanical strength and chemical strength of the surface protection layer, and increases the protective function with respect to a transparent conductive oxide layer and the like. Among such structures, it is favorable to introduce a crosslinked structure derived from an ester compound having an acidic group and a polymerizable functional group in the same molecule.

As an ester compound having an acidic group and a polymerizable functional group in the same molecule, an ester of a compound whose molecule contains a polyacid such as phosphoric acid, sulfuric acid, oxalic acid, succinic acid, phthalic acid, fumaric acid, or maleic acid; a polymerizable functional group such as an ethylenically unsaturated group, silanol group, or epoxy group; and a hydroxyl group may be listed. Note that although the ester compound may be a polyhydric ester such as a diester or triester, it is favorable that at least one acidic group of a polyacid is not esterified.

In the case of the surface protection layer 31 having a crosslinked structure derived from an ester compound described above, the mechanical strength and chemical strength of the surface protection layer are increased, and the adhesiveness between the surface protection layer 31 and the transparent conductive oxide layer 13 is increased, by which the durability of the transparent conductive oxide layer is particularly increased. Among ester compounds described above, an ester compound of phosphoric acid and an organic acid having a polymerizable functional group (phosphate ester compound) is excellent in adhesiveness to a transparent conductive oxide layer. In particular, a surface protection layer having a crosslinked structure derived from a phosphoric acid ester compound is excellent in adhesiveness to the transparent conductive oxide layer.

From the viewpoint of increasing the mechanical strength and chemical strength of the surface protection layer 31, an ester compound described above favorably contains a (meth)acryloyl group as a polymerizable functional group. Also, from the viewpoint of making the introduction of a cross-linked structure easier, an ester compound described above may have multiple polymerizable functional groups in a molecule. As an ester compound described above, for example, a phosphoric acid monoester compound or phosphoric acid diester compound expressed by the following formula (1) is used favorably. Note that a phosphoric acid monoester and a phosphoric acid diester may also be used together. 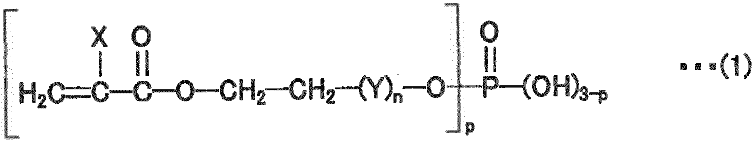 In the formula, X represents a hydrogen atom or a methyl group, and (Y) represents an - OCO(CH₂)₅- group. Here, n is 0 or 1 and p is 1 or 2.

The content of the structure derived from an ester compound described above in a surface protection layer 31 is favorably greater than or equal to 1 mass% and less than or equal to 20 mass%, more favorably greater than or equal to 1.5 mass% and less than or equal to 17.5 mass%, even more favorably greater than or equal to 2 mass% and less than or equal to 15 mass%, and particularly favorably greater than or equal to 2.5 mass% and less than or equal to 12.5 mass%. If the content of the ester compound-derived structure is excessively low, the effect of improving the strength and adhesiveness may not be obtained sufficiently. On the other hand, if the content of the ester compound-derived structure is excessively high, the curing rate when forming a surface protection layer decreases to reduce the hardness, or the slipperiness of the surface protection layer surface may be reduced to reduce the abrasion resistance. The content of the structure derived from an ester compound in a surface protection layer can be set in a desired range by adjusting the content of an ester compound described above in a composition when forming the surface protection layer.

The method of forming a surface protection layer 31 is not limited in particular. It is favorable to form a surface protection layer by a method in which, for example, a solution is prepared by dissolving an organic material or a curable monomer or oligomer of an organic material, and an ester compound described above in a solvent; this solution is coated on a transparent conductive oxide layer 13; after the solvent is dried, the coated material is irradiated with ultraviolet rays or electron rays, or energized by heat, to be cured.

Also, in the case of using an inorganic material as the material of a surface protection layer 31, a film may be formed by one or more types of dry processes selected from among, for example, sputtering, vacuum evaporation, CVD, electron beam evaporation, and the like.

Note that other than organic materials and inorganic materials described above, as materials of a surface protection layer 31, additives including a coupling agent such as a silane coupling agent or titanium coupling agent; a leveling agent; an ultraviolet absorber; an antioxidant; a heat stabilizer; a lubricant; a plasticizer; an anti-coloring agent; a flame retardant; and an antistatic agent, may be included.

Furthermore, a surface protection layer 31 may be constituted with multiple layers of different materials, by laminating an inorganic material and an organic material.

Although characteristics required for a heat-ray-reflective, light-transmissive base material of the present embodiment are not limited in particular, an emissivity measured from the side of a transparent conductive oxide layer is favorably less than or equal to 0.60, more favorably less than or equal to 0.50, and even more favorably less than or equal to 0.40.

This is because setting the emissivity to be less than or equal to 0.60 enables to obtain a heat-ray-reflective, light-transmissive base material having sufficient heat insulation performance, which is favorable. The lower limit value of the emissivity may be, although not limited in particular, for example, greater than 0 because a smaller value is more favorable.

As described above, a heat-ray-reflective, light-transmissive base material of the present embodiment includes a light-transmissive base material, a hard-coat layer, and a transparent conductive oxide layer. Here, the emissivity measured from the side of the transparent conductive oxide layer is an emissivity measured by having the transparent conductive oxide layer irradiated with infrared rays on a surface of the heat-ray-reflective, light-transmissive base material on the side closer to the transparent conductive oxide layer in the above three layers, among the surfaces of the heat-ray-reflective, light-transmissive base material.

### [Heat-ray-reflective window]

Next, a configuration example of a heat-ray-reflective window of the present embodiment will be described. As illustrated in FIG. 4, a heat-ray-reflective window 40 of the present embodiment includes a light-transmissive base material 41 for windows and a heat-ray-reflective, light-transmissive base material 42 described above disposed over one surface 41a of the light-transmissive base material 41 for windows.

The light-transmissive base material 41 for windows is, for example, a light-transmissive base material disposed on the daylighting part of a window, and, for example, a glass material or a light-transmissive resin base material may be used.

The heat-ray-reflective, light-transmissive base material 42 described above may be disposed on the one surface of the light-transmissive base material 41 for windows. The method of fixing the heat-ray-reflective, light-transmissive base material 42 on the light-transmissive base material 41 for windows is not limited in particular. For example, the base material 42 can be fixed, for example, by disposing an adhesive layer or the like as described using FIG. 2 on the side 42b of the heat-ray-reflective, light-transmissive base material 42 facing the light-transmissive base material 41 for windows.

When fixing the heat-ray-reflective, light-transmissive base material 42 on the light-transmissive base material 41 for windows, it is favorable to carry out the fixation such that the transparent conductive oxide layer is positioned on the side of the interior of a room or vehicle. In other words, it is favorable to fix the heat-ray-reflective, light-transmissive base material 42 such that the transparent conductive oxide layer is positioned closer on the side of the interior of a room or vehicle than the light-transmissive base material included in the heat-ray-reflective, light-transmissive base material 42.

Normally, the heat-ray-reflective, light-transmissive base material 42 is disposed on the side of a room interior relative to the light-transmissive base material 41 for windows. Therefore, in the example illustrated in FIG. 4, it is favorable to fix the heat-ray-reflective, light-transmissive base material 42 such that the transparent conductive oxide layer is positioned on the side of the other surface 42a opposite to the one surface 42b facing the light-transmissive base material 41 for windows.

This is because since the transparent conductive oxide layer has a function of reflecting far-infrared rays, disposing the transparent conductive oxide layer to be oriented toward the interior of a room or the like, enables to control emission of far-infrared rays generated inside the room or the like to the outside.

According to the present embodiment, a heat-ray-reflective window includes a heat-ray-reflective, light-transmissive base material described above. For this reason, it is possible to reflect far-infrared rays and to have a heat-insulating function. Also, the heat-ray-reflective window can be made to be excellent in abrasion resistance.

### [Examples]

In the following, specific examples will be described; note that the present invention is not limited to these examples.

### (1) Visible light transmittance

A visible light transmittance was determined according to JIS A5759-2008 (films for building window glass) by using a spectrophotometer (product name "U-4100", manufactured by Hitachi High-Technologies Corporation).

### (2) Emissivity

An emissivity was determined according to JIS R3106-2008 (test method of transmittance, reflectance, emissivity, and solar heat gain coefficient of plate glass), by measuring a positive reflectance obtained when the surface protection layer side was irradiated with infrared rays in a wavelength range of 5 µm to 25 µm by using a Fourier-transform infrared spectrometer (FT-IR) device (manufactured by Varian) equipped with a variable-angle reflection accessory.

### (3) Abrasion resistance

A heat-ray-reflective, light-transmissive base material was cut to have a size of 15 cm × 5 cm, and a surface on the side of the light-transmissive base material was bonded to a 1.5-mm glass via a 25-µm-thick adhesive layer, to be used as a sample. By using a 10-pens-equipped tester, while applying a 1-kg load with steel wool (Bonstar #0000), a 10-cm-long range of the exposed surface of the heat-ray-reflective, light-transmissive base material fixed on the glass was rubbed with 10 reciprocal motions. Note that the exposed surface of a heat-ray-reflective, light-transmissive base material means a surface of the surface protection layer in Examples 1 to 9, Examples 11 to 13, and Comparative Examples 1 and 2; or a surface of the conductive oxide layer in Example 10.

After the test, the presence or absence of scratches or delamination on the transparent conductive oxide layer of a sample was visually evaluated according to the following evaluation criteria.
Excellent: no scratch or delamination was confirmed on the transparent conductive oxide layer;
Fair: a scratch or delamination was confirmed in part of the transparent conductive oxide layer; and
Poor: a scratch or delamination was confirmed on the transparent conductive oxide layer.

### [Example 1]

A heat-ray-reflective, light-transmissive base material having a configuration shown in Table 1 was produced and evaluated.

The heat-ray-reflective, light-transmissive base material was produced to have a light-transmissive base material, a hard-coat layer, a transparent conductive oxide layer, and a surface protection layer as shown in Table 1.

As the light-transmissive base material, a 50-µm-thick polyethylene terephthalate (PET) film (product name: T602E50, manufactured by Mitsubishi Plastics, Inc.) was used.

A resin solution was coated on one surface of the light-transmissive base material by spin coating, dried, and then, cured by ultraviolet (UV) irradiation (300 mJ/cm²) under a nitrogen atmosphere to form a hard-coat layer having a thickness shown in Table 1.

The resin solution was prepared by mixing an optical polymerization initiator (product name: Irgacure 184, manufactured by BASF) into a UV-curable urethane acrylate hard-coat resin solution (product name: ENS 1068, manufactured by DIC Corporation) to have a resin equivalent of 3 wt%.

An ITO film (indium tin oxide film) was formed as the transparent conductive oxide layer over the hard-coat layer. Specifically, using a complex oxide target having an SnO₂ content of 10 wt% with respect to the total amount of In₂O₃ and SnO₂, a film was formed so as to have a thickness shown in Table 1 by DC magnetron sputtering, to which heat treatment was then applied at 150 °C for 30 minutes to complete the film.

As the sputtering gas, a mixed gas of argon and a small amount of oxygen was used, and the film was formed under a process pressure of 0.2 Pa.

A surface protection layer was formed on the transparent conductive oxide layer. Specifically, a mixed solution was prepared in which an optical polymerization initiator (manufactured by BASF, product name: Irgacure 127) was mixed into an acrylic hard-coat resin solution (manufactured by JSR Corporation, product name: Opstar Z7535) to have a resin equivalent of 3 wt%. Then, the mixed solution was coated on the transparent conductive oxide layer by spin coating so as to obtain a thickness shown in Table 1 after drying. After the drying, UV irradiation (300 mJ/cm²) was carried out under a nitrogen atmosphere to cure the coating.

The obtained heat-ray-reflective, light-transmissive base material was evaluated as described above. The results are shown in Table 1.

### [Examples 2 and 3]

A heat-ray-reflective, light-transmissive base material was produced and evaluated in substantially the same way as in Example 1 except that a transparent conductive oxide layer was formed so as to have a thickness shown in Table 1. The results are shown in Table 1.

### [Example 4]

A heat-ray-reflective, light-transmissive base material was produced and evaluated in substantially the same way as in Example 1 except that a surface protection layer was formed so as to have a thickness shown in Table 1. The results are shown in Table 1.

### [Example 5]

A heat-ray-reflective, light-transmissive base material was produced and evaluated in substantially the same way as in Example 1 except that a surface protection layer was configured as follows. The results are shown in Table 1.

An oxide film containing Si and Zr (denoted as "SXO" in Table 1) was formed as a surface protection layer over the transparent conductive oxide layer. Specifically, a film was formed so as to have a thickness shown in Table 1 by DC magnetron sputtering using an alloy target having a Zr content of 30 wt% with respect to the total amount of metal Si and Zr.

As the sputtering gas, a mixed gas of argon/oxygen = 85/15 (volume ratio) was used, and the film was formed under a process gas pressure of 0.2 Pa.

The evaluation results are shown in Table 1.

### [Example 6]

A heat-ray-reflective, light-transmissive base material was produced and evaluated in substantially the same way as in Example 1 except that a surface protection layer was formed so as to have a thickness shown in Table 1. The results are shown in Table 1.

### [Example 7]

A heat-ray-reflective, light-transmissive base material was produced and evaluated in substantially the same way as in Example 1 except that as a transparent conductive oxide layer, instead of the ITO film, an IZO film (Indium Zinc Oxide film) was formed to have a thickness of 400 nm. The results are shown in Table 1.

The IZO film was formed to have a thickness of 400 nm by DC magnetron sputtering using a complex oxide target having a ZnO content of 10 wt% with respect to the total amount of In₂O₃ and ZnO.

Note that as the sputtering gas, a mixed gas of argon and a small amount of oxygen was used, and the film was formed under a process pressure is 0.2 Pa.

The evaluation results are shown in Table 1.

### [Example 8]

A heat-ray-reflective, light-transmissive base material was produced and evaluated in substantially the same way as in Example 3 except that a hard-coat layer was formed so as to have a thickness shown in Table 1. The results are shown in Table 1.

### [Example 9]

A heat-ray-reflective, light-transmissive base material was produced and evaluated in substantially the same way as in Example 1 except that a hard-coat layer was formed so as to have a thickness shown in Table 1. The results are shown in Table 1.

### [Example 10]

A heat-ray-reflective, light-transmissive base material was produced and evaluated in substantially the same way as in Example 1 except that a blue plate glass (manufactured by Matsunami Glass Ind.,Ltd.) having a thickness of 3 mm was used as the light-transmissive base material and that a surface protection layer was not provided. The results are shown in Table 1.

### [Example 11]

A heat-ray-reflective, light-transmissive base material was produced and evaluated in substantially the same way as in Example 1 except that a transparent conductive oxide layer was formed so as to have a thickness shown in Table 1. The results are shown in Table 1.

### [Example 12]

A heat-ray-reflective, light-transmissive base material was produced and evaluated in substantially the same way as in Example 1 except that a surface protection layer was formed so as to have a thickness shown in Table 1. The results are shown in Table 1.

### [Example 13]

A heat-ray-reflective, light-transmissive base material was produced and evaluated in substantially the same way as in Example 1 except that an underlayer was formed between the hard-coat layer and the transparent conductive oxide layer.

An Al oxide film as an adhesiveness improving layer as an underlayer on the hard-coat layer, namely, an alumina film (denoted as "Al₂O₃" in Table 1) was formed. Specifically, using a metal Al target, an underlayer was formed on the hard-coat layer by DC magnetron sputtering so as to have a thickness shown in Table 1.

As the sputtering gas, a mixed gas of argon/oxygen = 85/15 (volume ratio) was used, and the film was formed under a process gas pressure of 0.2 Pa.

After having formed the underlayer, a transparent conductive oxide layer and a surface protection layer were formed on the underlayer in substantially the same way as in Example 1 to obtain a heat-ray-reflective, light-transmissive base material.

The evaluation results are shown in Table 1.

### [Comparative Example 1]

A heat-ray-reflective, light-transmissive base material was produced and evaluated in substantially the same way as in Example 1 except that a hard-coat layer was not provided. The results are shown in Table 1.

### [Comparative Example 2]

A heat-ray-reflective, light-transmissive base material was produced and evaluated in substantially the same way as in Example 1 except that an SiO₂ film was formed instead of the transparent conductive oxide layer. The results are shown in Table 1.

The SiO₂ layer was formed so as to have a thickness of 80 nm by DC magnetron sputtering using a metal Si target. As the sputtering gas, a mixed gas of argon/oxygen = 85/15 (volume ratio) was used under a process pressure of 0.2 Pa.

The evaluation results are shown in Table 1.

**[Table 1]**

| | Configuration of heat-ray-reflective, light-transmissive base material | | | | | | | | | Evaluation results | | |
|---|---|---|---|---|---|---|---|---|---|---|---|---|
| | Light-transmis-sive base material | Hard coat layer | | Underlayer | | Transparent conductive oxide layer | | Surface protective layer | | Optical characteristics | | Abrasion resistance |
| | | Material | Thickness (*µ*m) | Material | Thickness (nm) | Material of transparent conductive oxide | Thickness (nm) | Material | Thickness (nm) | Visible light transmittance (%) | Emis-sivity | |
| Ex. 1 | PET | Urethane acrylate | 2 | None | - | ITO | 80 | Acrylate | 100 | 92 | 0.30 | Excellent |
| Ex. 2 | PET | Urethane acrylate | 2 | None | - | ITO | 40 | Acrylate | 100 | 92 | 0.45 | Excellent |
| Ex. 3 | PET | Urethane acrylate | 2 | None | - | ITO | 150 | Acrylate | 100 | 92 | 0.15 | Excellent |
| Ex. 4 | PET | Urethane acrylate | 2 | None | - | ITO | 80 | Acrylate | 450 | 88 | 0.44 | Excellent |
| Ex. 5 | PET | Urethane acrylate | 2 | None | - | ITO | 80 | SXO | 10 | 84 | 0.30 | Excellent |
| Ex. 6 | PET | Urethane acrylate | 2 | None | - | ITO | 80 | Acrylate | 40 | 87 | 0.30 | Excellent |
| Ex. 7 | PET | Urethane acrylate | 2 | None | - | IZO | 400 | Acrylate | 100 | 85 | 0.28 | Excellent |
| Ex. 8 | PET | Urethane acrylate | 1 | None | - | ITO | 150 | Acrylate | 100 | 92 | 0.15 | Excellent |
| Ex. 9 | PET | Urethane acrylate | 0.5 | None | - | ITO | 80 | Acrylate | 100 | 92 | 0.30 | Fair |
| Ex. 10 | Glass | Urethane acrylate | 2 | None | - | ITO | 80 | None | - | 83 | 0.30 | Excellent |
| Ex. 11 | PET | Urethane acrylate | 2 | None | - | ITO | 30 | Acrylate | 100 | 91 | 0.55 | Excellent |
| Ex. 12 | PET | Urethane acrylate | 2 | None | - | ITO | 80 | Acrylate | 1000 | 88 | 0.60 | Excellent |
| Ex. 13 | PET | Urethane acrylate | 2 | Al₂O₃ | 3 | ITO | 80 | Acrylate | 100 | 92 | 0.30 | Excellent |
| Comp. ex. 1 | PET | None | - | None | - | ITO | 80 | Acrylate | 100 | 92 | 0.30 | Poor |
| Comp. ex. 2 | PET | Urethane acrylate | 2 | None | - | SiO₂ | 80 | Acrylate | 100 | 90 | 0.86 | Excellent |

According to the results shown in Table 1, comparing Example 1 to Example 13 with Comparative Example 1, it was confirmed that provinding a hardcoat layer enabled to obtain a heat-ray-reflective light-transmissive base material having excellent abrasion resistance. One can understand that this is because providing a hard-coat layer enables to control deformation of a transparent conductive oxide layer even when pressed, and to control generation of scratches and delamination due to friction.

Also, comparing Example 1 to Example 13 with Comparative Example 2 having no transparent conductive oxide layer, in each of Example 1 to Example 13, the emissivity was significantly reduced as compared to Comparative Example 2, and it was also confirmed that providing a transparent conductive oxide layer enables to exhibit heat insulation.

As above, heat-ray-reflective, light-transmissive base materials and heat-ray-reflective windows have been described according to the embodiments, examples, and the like. Note that the present invention is not limited to the embodiments or examples described above. Various modifications and changes can be made within the scope of the invention as described in the claims.

This application claims priorities based on Japanese Patent Application No. 2017-073174 filed with the Japanese Patent Office on March 31, 2017, and Japanese Patent Application No. 2018-049516 filed with the Japanese Patent Office on March 16, 2018; and the entire contents of Japanese Patent Application No. 2017-073174 and Japanese Patent Application No. 2018-049516 are incorporated herein by reference.

### [List of reference codes]

10, 20, 30, 42 heat-ray-reflective, light-transmissive base material
11 light-transmissive base material
12 hard-coat layer
13 transparent conductive oxide layer
21 adhesive layer
31 surface protection layer
40 heat-ray-reflective window
41 light-transmissive base material for a window

## Claims

1. A heat-ray-reflective, light-transmissive base material, comprising:
a light-transmissive base material;
a hard-coat layer disposed over one surface of the light-transmissive base material; and
a transparent conductive oxide layer containing a transparent conductive oxide, disposed over the hard-coat layer.

2. The heat-ray-reflective, light-transmissive base material as claimed in claim 1, wherein the transparent conductive oxide layer contains, as the transparent conductive oxide, one or more species selected from among
an indium oxide doped with one or more species selected from among tin, titanium, tungsten, molybdenum, zinc, and hydrogen;
a tin oxide doped with one or more species selected from among antimony, indium, tantalum, chlorine, and fluorine; and
a zinc oxide doped with one or more species selected from among indium, aluminum, tin, gallium, fluorine, and boron.

3. The heat-ray-reflective, light-transmissive base material as claimed in claim 1 or 2, wherein a thickness of the transparent conductive oxide layer is greater than or equal to 30 nm and less than or equal to 500 nm.

4. The heat-ray-reflective, light-transmissive base material as claimed in any one of claims 1 to 3, wherein a thickness of the hard-coat layer is greater than or equal to 0.5 µm and less than or equal to 10 µm.

5. The heat-ray-reflective, light-transmissive base material as claimed in any one of claims 1 to 4, further comprising:
a surface protection layer over the transparent conductive oxide layer.

6. The heat-ray-reflective, light-transmissive base material as claimed in claim 5, wherein a thickness of the surface protection layer is greater than or equal to 5 nm and less than or equal to 1 µm.

7. The heat-ray-reflective, light-transmissive base material as claimed in any one of claims 1 to 6, further comprising:
an adhesive layer on a surface of the light-transmissive base material opposite to the one surface.

8. The heat-ray-reflective, light-transmissive base material as claimed in any one of claims 1 to 7, wherein an emissivity measured from a side of the transparent conductive oxide layer is less than or equal to 0.60.

9. A heat-ray-reflective window comprising:
a light-transmissive base material for a window; and
the heat-ray-reflective, light-transmissive base material as claimed in any one of claims 1 to 8, disposed over one surface of the light-transmissive base material for the window.
